# EUROPÄISCHE PATENTSCHRIFT

(11) **EP 2 587 642 B1**
(45) Veröffentlichungstag und Bekanntmachung des Hinweises auf die Patenterteilung: **21.11.2018**
(21) Anmeldenummer: 12007296.2
(22) Anmeldetag: 24.10.2012
(51) Int. Cl.: H02K 11/00, H02K 5/22

(54) **Serielle Verkabelung von Elektromotoren mit integrierten Elektronikplatinen**
Serial cabling of electric motors with integrated electronics circuit boards
Câblage en série de moteurs électriques avec platines électroniques intégrées

(30) Priorität: 27.10.2011 DE 102011117261
(43) Veröffentlichungstag der Anmeldung: 01.05.2013
(73) Patentinhaber: Schneider Electric Automation GmbH, 97828 Marktheidenfeld (DE)
(72) Erfinder: Müllerschön, Volker, 97204 Höchberg (DE); Unger, Heinz, 98728 Marktheidenfeld (DE); Konopka, Oliver, 97828 Marktheidenfeld (DE); Albert, Michael, 97225 Zellingen (DE)
(74) Vertreter: Pöhner, Wilfried Anton

(56) Entgegenhaltungen:
- DE-A1- 2 908 936
- DE-A1-102008 058 511

## Beschreibung

Die Erfindung bezieht sich auf einen Elektromotor mit einem Gehäuse, in dem wenigstens eine Elektronikplatine angeordnet ist, wobei aus der erster Stirnseite des Gehäuses die axial verlaufende Abtriebswelle herausragt und an der gegenüberliegenden, zweiten Stirnseite des Gehäuses eine elektrische Leistungssteckverbindung zur Versorgung des Elektromotors und der Elektronikplatine mit elektrischer Energie und wenigstens eine elektrische Datensteckverbindung zum Einlesen von Sollwerten in die Elektronikplatine und zum Auslesen von Istwerten und Speicherdaten und zum Austausch anderer Daten befestigt sind.

Im vergangenen halben Jahrhundert ist mit zunehmender Automatisierung von Maschinen und Geräten durch elektrische Antriebe deren Anzahl in einer einzelnen Maschine stark angestiegen. Auf aktuellem Stand der Technik sind z.B. Verpackungsmaschinen und Maschinen zum Abfüllen von Getränken mit Dutzenden von Elektromotoren ausgerüstet, deren Drehzahl oder deren Drehmoment oder deren Position elektronisch einstellbar ist. Dabei sind Steuerungen - auch "open loop" genannt - ebenso üblich wie Regelungen - auch "closed loop" oder Servoantrieb genannt.

Proportional zur Anzahl der Antriebe wuchsen auch der zugehörige Schaltschrank und die erforderlichen Kilometer an Kabeln. Der Aufwand für Planung, Fertigung und Inbetriebnahme aller notwendigen Verkabelungen wurde so groß, dass er ein nennenswerter Teil der Wertschöpfung der gesamten Maschine geworden ist.

Deshalb kam schon in den 70er Jahren des 20. Jhdts. die Idee auf, den Stromrichter aus dem Schaltschrank heraus und an den Motor zu verlegen. 1978 wurde unter US 4,079,278 ein Thyristor-Chopper zur Steuerung der Feldversorgung eines Gleichstrommotors patentiert, dessen Leistungsthyristoren mit dem Motorgehäuse verschraubt waren und dessen Elektronik im Klemmenkasten des Motors untergebracht war.

1986 wird unter DE 36 02 606 ein Frequenzumrichter im Klemmenkasten eines Elektromotors zum Antrieb der Trommel einer Waschmaschine angemeldet.

Auf aktuellem Stand der Technik werden hochwertige Servoregler samt der Auswertung der im Motor rotierenden Istwertgeber und der Ansteuerung und Datenausgabe über Bus-Systeme wie SERCOS, CAN und andere in das Gehäuse von Servomotoren integriert.

Die Erhöhung der Taktzahlen der Maschinen bei gleichzeitig wachsenden Anforderungen an die Genauigkeit und die Betriebssicherheit der Antriebe erfordern die laufende Rückmeldung von aktuellen Positions-Istwerten, Drehmoment-Istwerten und anderen Zustandsmeldungen. Ein dafür besonders gut geeignetes Bus-System wie SERCOS arbeitet bei einer ringförmigen Verkabelung aller Antriebe am effizientesten. Wenn eine solche Topologie in einer sternförmigen Verkabelung realisiert wird, wird durch die notwendige Hin- und Rückleitung die Verkabelung sehr aufwendig.

Zusätzlich müssen die Datenleitungen und die Leistungsversorgungen gut voneinander abgeschirmt werden, um Fehler durch Übersprechen von einem auf den anderen Leiter zu vermeiden.

Die Aufgabe der Verkabelung wird dadurch weiter erschwert, dass die Motoren für einen möglichst effizienten Betrieb mit einer weit höheren Spannung versorgt werden müssen als die Elektronik. Dafür geeignete Kabel sind also relativ komplex und voluminös und deshalb schwer zu verlegen.

Wenn zur Reduzierung der Gesamtlänge der Kabel eine ringförmige Struktur aufgebaut werden soll, die dann auch noch an jedem Motor zwecks Reduzierung der Montage- und Wartungszeiten steckbar sein soll, ergeben sich als weitere Probleme, dass an jedem Motor wenigstens vier Steckverbindungen nötig werden, nämlich mindestens zwei für das Herein- und das Herausführen der Leistungsverkabelung und wenigstens zwei weitere für den Datenaustausch. Zusätzlich muss ein Raum für das elektrische Anbinden des Motors und der Elektronikplatine geschaffen werden.

Ein derartiger Aufbau ist insbesondere bei kleinen Motoren - unterhalb eines Nenndrehmomentes von rund 10 Nm so voluminös und sperrig, dass sein Raumbedarf fast dem des Motors entspricht. Der erforderliche Einbauraum für die Steckverbindungen kann also in ungünstigen Fällen so groß werden, dass der Einbauraum für den gesamten Antrieb doppelt so groß wie für den Motor selbst ist.

Eine zusätzliche Schwierigkeit ergibt sich bei sehr dicht beieinander angeordneten Motoren. Dann darf die Verkabelung nicht radial über den Querschnitt des Motors hinausragen, denn dort würde sie mit den Kabeln und den Steckverbindungen benachbarter Motore kollidieren.

In derselben Maschine kann es jedoch auch Einbauräume geben, die einen in axialer Richtung besonders kurzen Antrieb erfordern. In dieser Situation sollen die Anschlüsse in axialer Richtung möglichst wenig über den Motor hinausragen. Stattdessen ist eine radiale Ausrichtung zu bevorzugen, also genau entgegensetzt zu der Forderung im vorherigen Absatz.

Das nächstkommende Dokument (= DE 29 08 936 A1) hat zum Ziel die Schaffung eines elektrischen Antriebes, der nach einem fest vorbestimmten Programm und ohne Steuerung von außen betrieben werden kann und dafür geeignet ist, fortlaufende Wiederholungen eines vorbestimmten Arbeitsablaufs durchzuführen. Dabei wird der Antrieb als geschlossene Einheit hergestellt, verkauft und eingesetzt, wobei sich in Abhängigkeit vom gewünschten Einsatzzweck die Programmierung des Steuerkreises ändert. Es gibt keinerlei Hinwiese, über die Orte der Anbringung der Steckverbindungen für Leistungen und Daten noch über deren Ausrichtung.

Auf diesem Hintergrund hat sich die Erfindung die Aufgabe gestellt, eine einfache standardisierte Vorrichtung zu entwickeln, mit der mehrere Elektromotoren mit integrierter Elektronik unter Verwendung von bekannten Standardkomponenten relativ schnell und relativ kostengünstig in möglichst vielen verschiedenen Einbausituationen steckbar miteinander verkabelt werden können, und zwar bei sehr unterschiedlichen Einbausituationen und Einbauräumen mit einer Begrenzung in axialer Richtung oder in mehreren radialen Richtungen.

Als Lösung lehrt die Erfindung einen Elektromotor mit den im Kennzeichen wiedergegebenen Merkmalen.

Das herausragende Merkmal der Erfindung ist also die Verteilerbox. Sie ermöglicht eine universelle Anpassung der Verkabelung eines Elektromotors mit integrierter Elektronik an die verschiedensten räumlichen Bedingungen beim Einbau in eine Maschine. Und zwar insbesondere dann, wenn standardisierte Kabelsätze verwendet werden, bei denen z.B. nur zwischen einem geraden und einem gewinkelten Stecker für die Datenverbindung und zwischen einer gera Um eine ausreichende Variabilität erreichen zu können, benötigt eine erfindungsgemäße Verteilerbox im einfachsten Fall neben den Anschlüssen zum Motor noch vier Öffnungen, in die Steckverbindungen zum Übertragen von elektrischer Leistung oder Steckverbindungen zur Übertragung von Daten eingesetzt werden können. Die Leistungsverbindungen übertragen Ströme zur Versorgung eines Umrichters zur Drehzahl- oder Drehmomentregelung oder Steuerung eines Motors, sowie zur Versorgung der Elektronik selbst. Aktuell übliche Spannungen zur Versorgung der Umrichter für die Motoren sind z.B. 250 bis 700 Volt Gleichstrom und zur Versorgung der Elektronik 24 Volt Gleichstrom.

Über die Datenstecker werden Sollwerte, wie Positionen, Drehzahlen, Drehmomente, Höchstwerte, Mindestwerte oder andere Befehle oder Parameter an die Elektronikplatine im Gehäuse gesendet und von dort auch Daten empfangen, wie z.B. Istwerte von Positionen, Drehzahlen, Drehmomenten oder gespeicherte Daten, z.B. aus einem Datenrekorder über zurückliegende Ereignisse oder über die Parametrierung eines Reglers in der Elektronikplatine im Motor. Diese Daten werden in aller Regel in einer zentralen Steuerung generiert bzw. verarbeitet.

Die erfinderische Verteilerbox ist für eine Montage an der abtriebsfernen Stirnseite des Motorgehäuses vorgesehen, die also der anderen Stirnseite mit der Abtriebswelle gegenüberliegt. Von dort aus können sich die Anschlüsse wahlweise in radialer oder in axialer Richtung erstrecken.

Weil die Daten in der Praxis der Wirtschaftlichkeit halber zumeist in einem Kabel übertragen werden, das vom Leistungskabel getrennt verläuft, werden in der einfachsten Ausführungsform einer erfindungsgemäßen Verteilerbox auch wenigstens zwei Öffnungen in radialer und zwei Öffnungen in axialer Richtung vorgesehen.

Die beiden axial ausgerichteten Öffnungen werden im allgemeinsten Fall nebeneinander in der gleichen Fläche angeordnet sein. Das ist auch für die beiden radial ausgerichteten Anschlüsse möglich. In der Praxis wird es jedoch bevorzugt werden, dass die beiden radial ausgerichteten Öffnungen in verschiedene Richtungen weisen, insbesondere in genau entgegen gesetzte Richtungen. Vorteilhaft ist es, die beiden waagerecht abgehenden Öffnungen so gegeneinander zu versetzen, dass die Stecker zweier nah benachbarter Motoren nicht miteinander kollidieren. Dazu bietet die Stirnkante der Verteilerbox auch ausreichend viele verschiedene Möglichkeiten.

Für die Mindestgröße einer erfindungsgemäßen Verteilerbox ergibt sich ein erstes Kriterium daraus, dass die Stecker für die Datensteckverbindung in aller Regel eine Mindestgröße nicht unterschreiten können. Daraus ergibt sich eine Mindestgröße für den zur Befestigung erforderlichen Flansch. Das zweite Kriterium für die Mindestgröße ist die Größe der Leistungssteckverbindung.

In der Praxis wird bei den kleineren Motoren der Flansch für die Leistungssteckverbindung meist die gleiche Größe wie der Flansch für die Datensteckverbindung haben. Eine nach diesen Kriterien festgelegte Mindestgröße kann natürlich auch für Elektromotoren mit größerem Querschnitt verwendet werden, sofern in der Leistungssteckverbindung dann noch ein ausreichender Leiterquerschnitt untergebracht werden kann.

Es ist deshalb in der Praxis absehbar, dass auch eine größere Motorfamilie mit einer relativ geringen Anzahl von verschiedenen Größen einer Verteilerbox abgedeckt werden kann

In der Praxis wird es also relativ zahlreiche Motore geben, bei denen der Befestigungsflansch für die Leistungssteckverbindung die gleiche Größe wie der Befestigungsflansches für die Datensteckverbindung hat. In diesen Fällen ist es sinnvoll, dass in die Öffnungen der Verteilerbox wahlweise eine Leistungssteckverbindung oder eine Datensteckverbindung eingebaut werden kann. Das ist insbesondere dann sehr einfach, wenn die Befestigungsflansche der Leistungssteckverbindung und der Datensteckverbindung nach außen hin identisch sind. Dann sind auch die Öffnungen und die Vorrichtung zum Einbau der Steckverbinder, wie z.B. zusätzliche Schraublöcher identisch.

Alternativ ist jedoch auch ein Einbau von verschiedenen Steckverbindungen in einer Öffnung möglich, wenn für beide Typen entsprechende, zumindest teilweise, komplementäre Einbauvorrichtungen geschaffen sind. Zur Überbrückung von Größenunterschieden zwischen den kleinen Flanschen von Datensteckern und den großen Flanschen von Leistungssteckern sind z.B. Zungen denkbar, die in die Öffnung hineinragen und die kleine Flansche tragen und die vor dem Einbau von großen Flanschen zur Seite gebogen oder abgekniffen werden.

Eine Anpassung an unterschiedlich große Typen von Steckern ist auch dadurch möglich, dass die Öffnung eine längliche Form aufweist und dahinein passende, große Stecker mit Kontaktstiften in Reihe eingebaut werden können. In diese länglich geformten, großen Öffnungen werden alternativ kleine, etwa quadratische Steckverbindungen quer zur Längsachse der Öffnung eingesetzt, so dass sie nur einen Teil der Öffnung ausfüllen, aber trotzdem an den gegenüberliegenden Kanten der Öffnungen mechanisch befestigt werden können, z.B. durch Verschrauben.

In den beiden vorgenannten und in anderen Fällen, bei denen Teile der Öffnung durch die Steckverbindung nicht abgedeckt werden, kann eine zusätzliche Abdeckung zum Verschließen der Öffnungen montiert werden. Dadurch kann eine entsprechend hohe Schutzart des gesamten Antriebes erreicht werden.

Im Prinzip ist bei einer erfindungsgemäßen Verteilerbox die Anzahl der Öffnungen zum Einbau von Steckverbindungen nicht begrenzt. Je größer die Anzahl der Öffnungen ist, desto größer ist die Möglichkeit, eine bestimmte, passende Richtung für eine Steckverbindung auswählen zu können. Nicht benutzte Öffnungen können dann durch Blindstopfen verschlossen werden.

Bei der Anwendung wird eine besonders interessante Variante einer erfindungsgemäßen Verteilerbox sechs Öffnungen zuzüglich der Anschlüsse an den Motor aufweisen. In praktischen Versuchen hat sich von den verschiedenen, denkbaren Varianten mit sechs Öffnungen eine Ausführung als besonders vielfältig einsetzbar herausgestellt, die zwei Öffnungen in axialer Richtung und weitere Öffnungen in verschiedene radiale Richtungen aufweist. Eine derartige Variante mit Öffnungen in drei verschiedenen, radialen Richtungen wird hier als Ausführungsbeispiel grafisch dargestellt und textlich beschrieben.

Zusätzliche Varianten für die Ausrichtung der Steckverbindungen ergeben sich beim Einbau in die Öffnung der Verteilerbox durch Verschwenken der Steckverbindung um ihre Längsachse. Eine mit üblichen Steckern leicht zu verwirklichende und in den hier anliegenden Figuren dargestellte Variante ist eine etwa quadratische Öffnung mit vier gleichmäßig darum herum angeordneten Gewindesacklöchern. In diese Öffnung kann z.B. die Dose einer Steckverbindung jeweils um 90 ° verschwenkt eingesetzt werden. Wenn in diese Steckverbindung ein Winkelstecker eingesetzt wird, so ist damit eine Änderung der Abgangsrichtung in vier Stufen möglich.

Es ist natürlich auch eine feinere Auflösung der Winkelausrichtung der Stecker als nur 90° möglich. Wenn z.B. der Stecker an seiner Außenfläche eine Kerbverzahnung aufweist, die in dazu komplementären Nuten in den Öffnungen hineinpasst, kann ein Steckverbinder mit einer ziemlich feinen Abstufung seiner Verschwenkung gegenüber der Verteilerbox montiert werden.

Ein im Querschnitt kreisförmiger Stecker kann beim Einbau stufenlos verschwenkt werden. Er sollte dann aber gegen ein unbeabsichtigtes Verschwenken gesichert werden, z.B. durch eine zusätzliche Klemmverschraubung.

Um die Variabilität bei der Ausrichtung der Stecker noch weiter zu erhöhen schlägt die Erfindung winkelige Gegenstecker vor, die entweder in sich verschwenkbar sind oder die in eine verschwenkbare Dose einsteckbar sind. Eine derartige Verschwenkbarkeit ist z.B. durch im Gehäuse des Gegensteckers verschwenkbare Steckkontakten und deren flexible Verbindungen zum Anschlusskabel möglich. Die Verschwenkbarkeit kann entweder generell möglich sein oder nur nach Lockern einer mechanischen Befestigung, wie z.B. einer Überwurfmutter.

Wenn der Stecker nicht senkrecht zur Fläche der Öffnung ausgerichtet ist, sondern schräg, dann wird sich durch eine Verschwenkung des Steckers gegenüber der Verteilerbox auch die Ausrichtung des Steckers entsprechend ändern.

In einer besonders universell nutzbaren Ausführungsform einer erfindungsgemäßen Verteilerbox sind an der zweiten Stirnseite des Gehäuses vom Elektromotor die gleichen Leistungssteckverbinder und die gleichen Datensteckverbinder angebracht, die auch in die Öffnungen der erfindungsgemäßen Verteilerbox montiert werden. Dann kann in einer Maschine mit mehreren Motoren alternativ ein Motor auch ohne eine Verteilerbox direkt mit einem standardisierten Anschlusskabel verdrahtet werden, das auch für den Anschluss an eine Verteilerbox geeignet ist.

Auf diese Weise können mehrere Motoren sternförmig an eine zentrale Elektronikbaugruppe oder einen zentralen Anschlusskasten angeschlossen werden. Als Anschlusskasten kann eine erfindungsgemäße Verteilerbox auch ohne Motor genutzt werden.

In einen mit Standardsteckern bestückten Motor kann ohne jeden weiteren Umbau anstelle eines direkten Anschlusses eine erfindungsgemäße Verteilerbox eingesteckt werden, mit der dieser Motor dann in eine serielle oder kettenförmige Verkabelung eingebunden wird.

In einer anderen Ausführungsform sind die Leistungssteckverbindung und die Datensteckverbindung an der zweiten Stirnseite des Motorgehäuses in einer gemeinsamen Einhausung zusammengefasst. Diese Konfiguration wird auch als "Hybridstecker" bezeichnet. Die Einhausung kann für eine besonders stabile Befestigung der Verteilerbox - z.B. mit einer klappbaren Sicherungskralle - genutzt werden.

Auf aktuellem Stand der Technik sind Hybridkabel bekannt, die sowohl zur Leistungsversorgung eines Motors als auch zur Übertragung von Daten in die Elektronik im Motor als auch zum Auslesen von Daten aus dieser Elektronik nutzbar sind. Da derartige Kabel relativ aufwendig sind, werden sie in der Praxis nur an solchen Stellen eingesetzt, wo die Raumnot besonders hoch ist.

Die erfindungsgemäße Verteilerbox ermöglicht innerhalb der Verdrahtung einer Maschine mit mehreren Motoren den Wechsel von den teuren Hybridkabeln auf kostengünstigere, getrennte und parallel verlegte Kabel zur Leistungsversorgung und zur Datenübertragung. Dafür wird in die Öffnung einer erfindungsgemäßen Verteilerbox eine passende Steckverbindung für ein Hybridkabel eingesetzt. Innerhalb der Verteilerbox wird diese Hybridsteckverbindung mit einer Leistungssteckverbindung sowie mit einer Datensteckverbindung verdrahtet. Zusätzlich wird auch eine Verbindung zu dem Leistungsanschluss und zum Datenanschluss des jeweiligen Motors hergestellt. An einer derart konfigurierten Verteilerbox kann eine serielle Verdrahtung von Hybridkabeln auf getrennte Verkabelung und umgekehrt wechseln.

In einer weiteren Ausführungsvariante wird auf wenigstens eine Öffnung der Verteilerbox ein Winkeladapter in Form eines zweiseitig offenen Hohlkörpers aufgesetzt. Er ist ein Zwischenstück zwischen der Öffnung in der Verteilerbox und einer Steckverbindung. Dieser Adapter ist an seiner ersten, offenen Seite komplementär zu der Öffnung geformt, auf welcher der Hohlkörper aufgesetzt ist. Mit dieser Seite kann der Winkeladapter also wie eine Steckverbindung in der Öffnung der Verteilerbox befestigt werden. Seine zweite, offene Seite ist identisch zu der Öffnung geformt, auf der der Hohlkörper aufgesetzt ist. Deshalb kann in diese zweite offene Seite eine Steckverbindung befestigt werden.

Die eigentliche Funktion des Winkeladapters ist es, die Ausrichtung der Ebene einer Öffnung in der Verteilerbox abzuändern. Wenn die beiden offenen Seiten des Winkeladapters einen Winkel von 90 Grad zueinander einnehmen, wird dadurch auch die Steckverbindung um 90 Grad abgewinkelt. Ein derartiger Winkeladapter kann natürlich auch für beliebige andere Winkel erstellt werden.

Innerhalb einer erfindungsgemäßen Verteilerbox kann die für eine serielle Verkabelung ggf. erforderliche "T-Verbindung" unabhängig von den jeweils gewählten Kabelarten hergestellt werden: Die Steckverbindungen für die Leistung und für die Datenübertragung des Motors werden jeweils mit beiden Steckverbindungen in der Verteilerbox verdrahtet.

Es kann innerhalb einer erfindungsgemäßen Verteilerbox frei gewählt werden, ob nur die Leistungsverbindung oder nur die Datenverbindung T-förmig hergestellt werden soll, oder beide.

Für den Aufbau einer seriellen Verdrahtung zur Datenübertragung nach dem SERCOS-Prinzip wird eine erste Datensteckverbindung in der Verteilerbox mit einer ersten Datensteckverbindung auf der Elektronikplatine verbunden und eine zweite Datensteckverbindung in der Verteilerbox mit einer zweiten Datensteckverbindung auf der Elektronikplatine. Für eine CAN-Verbindung wird innerhalb der Verteilerbox eine T-förmige elektrische Verbindung zwischen den beiden "externen" Datensteckverbindungen und der Datensteckverbindung zur Elektronikplatine erstellt.

Innerhalb der Verteilerbox können also z.B. drei T-förmig verdrahte Anschlüsse für die Datenverbindung mit nur zwei verdrahteten Anschlüssen für die Leistungsversorgung kombiniert werden. Oder umgekehrt. Auf diese Weise ist bei einem Mehrmotorenantrieb einer Maschine die Kombination einer ringförmigen Leistungsversorgung mit einer sternförmigen Datenübertragung oder alternativ eine ringförmige Datenübertragung mit einer sternförmigen Energieversorgung möglich.

Dank der erfindungsgemäßen Verteilerbox kann also die Verkabelung einer Maschine mit zahlreichen Antrieben in einer ringförmigen Topologie - auch Daisy-Chain genannt - oder in einer sternförmigen Topologie oder in einer baumartigen Struktur frei gewählt oder in frei wählbaren Mischformen verwirklicht werden.

Die eleganteste Art der Ermittlung der Verkabelungsstruktur ist eine Ausarbeitung bereits bei der Konstruktion der Maschine. Alternativ ist aber auch eine experimentelle Ermittlung durch Versuch an einer praktisch existierenden oder umzubauenden Maschine möglich. In jedem Fall werden in einem ersten Schritt die Elektromotore an der Maschine platziert. In einem zweiten Schritt wird dann geprüft, ob der jeweilige Motor im Bereich seiner zweiten Stirnseite in der Maschine einen größeren Freiraum in axialer oder einen größeren Freiraum in radialer Richtung hat, oder ob der verfügbare Freiraum in keiner der beiden Richtungen sehr groß ist.

Dann können in einem dritten Schritt z.B. bei Motoren mit axialem Freiraum in die zwei axial ausgerichteten Öffnungen der Verteilerbox je eine Leistungssteckverbindung mit einem geraden Leistungsgegenstecker eingebaut werden und zwei radial ausgerichtete Öffnungen der Verteilerbox je eine Datensteckverbindung mit je einem winkeligen Datenstecker eingebaut werden.

Für die Motoren, die in radialer Richtung einen Freiraum aufweisen, werden in einem vierten Schritt z.B. nur in radial ausgerichtete Öffnungen der Verteilerbox Steckverbindungen mit geraden Gegensteckern eingebaut und in axial ausgerichtete Öffnungen grundsätzlich nur Steckverbindungen mit winkeligen Gegensteckern eingesetzt.

Insbesondere bei Motoren, die fast gar keinen Freiraum an ihrer zweiten Stirnseite nutzen können, werden ohne Einfügung einer erfindungsgemäßen Anschlussbox die Anschlusskabel direkt an den Motor angeschlossen und mit einem zentralen Anschlusskasten oder einer zentralen Elektronikbaugruppe oder einer erfindungsgemäßen Verteilerbox an einem anderen Motor verkabelt.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1: Schrägbild eines Elektromotors mit montierter Verteilerbox
- Figur 2: Verteilerbox als Einzelteil mit zwei Leistungssteckverbindungen und zwei Datensteckverbindungen

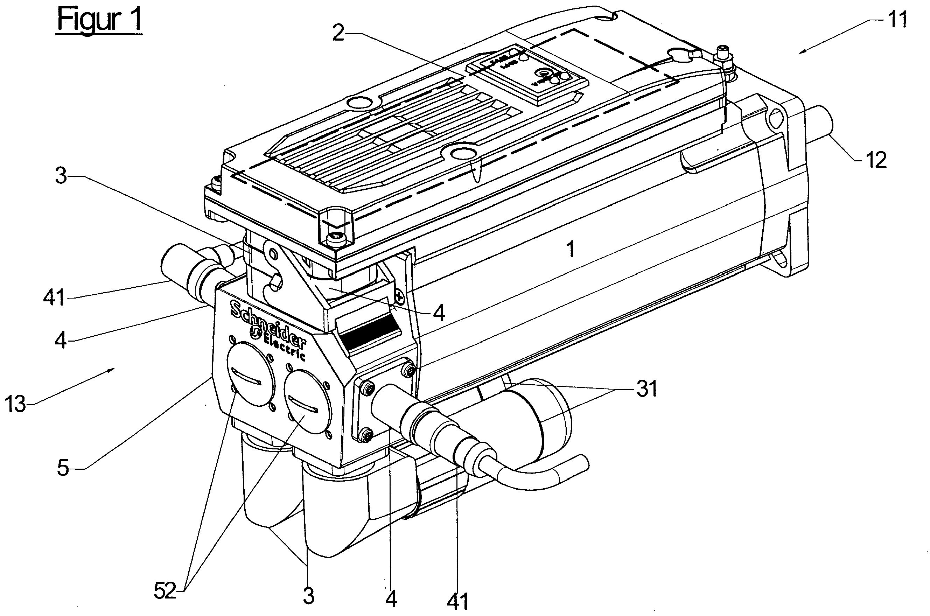

In **Figur 1** ist ein Elektromotor mit einer erfindungsgemäßen Verteilerbox 5 an seiner zweiten Stirnseite 13 im Schrägbild gezeichnet. Zu sehen ist das Gehäuse 1 des Elektromotors, in das die Elektronikplatine 2 eingebaut ist, die hier gestrichelt eingezeichnet ist, da sie durch den Deckel des Gehäuses hindurch nicht sichtbar ist. An der ersten Stirnseite 11 des Gehäuses 1, in Figur 1 rechts, tritt die Welle des Motors als Abtriebswelle 12 heraus.

An der zweiten Stirnseite 13 des Gehäuses 1 ist eine erfindungsgemäße Verteilerbox 5 angeordnet. Auf der Oberseite der Verteilerbox 5 sind eine Leistungssteckverbindung 3 und eine Datensteckverbindung 4 in einer gemeinsamen Einhausung untergebracht, die an das Gehäuse der Verteilerbox 5 angeformt ist. Im Ausführungsbeispiel der Figur 1 wird die Verteilerbox 5 mit dieser Einhausung am Gehäuse 1 befestigt, und zwar durch einen Klappriegel, der hinter Nasen auf der Außenseite der Verteilerbox 5 einklinkt.

Auf der Außenfläche der Verteilerbox 5 sind in Figur 1 u.a. zwei Datensteckverbindungen 4 angebracht. Sie weisen radial von der Längsachse des Gehäuses 1 hinweg. In die links zu sehende Datensteckverbindung 4 ist ein winkliger Datengegenstecker 41 eingesteckt, in die rechts zu sehende Datensteckverbindung 4 ist ein gerader Datengegenstecker 41 eingesteckt.

Anhand der Figur 1 ist es gut vorstellbar, dass die dargestellte Datenverbindung sehr gut zur Integration in eine ringförmige Datenleitung geeignet ist, indem eine - nicht gezeichnete - Datenleitung vom linken Bildrand kommt und sich über den winkligen Datengegenstecker 41, die erste Datensteckverbindung 4, die Verteilerbox 5 - wo die Elektronikplatine 2 eingeschleift wird, die zweite Datensteckverbindung 4 und den graden Datengegenstecker 41 sowie weiter in einer - hier nicht gezeichneten - Datenleitung bis zur rechten unteren Ecke der Figur 1 hin fortsetzt. Dort kann der nächste Antrieb in die Datenleitung eingefügt werden.

An der Unterseite der Verteilerbox 5 sind zwei Leistungssteckverbindungen 3 mit darin eingesteckten Leistungsgegensteckern 31 zu sehen. Beide Leistungsgegenstecker 31 sind abgewinkelt, wodurch die Ausladung des kompletten Antriebes in radialer Richtung begrenzt wird.

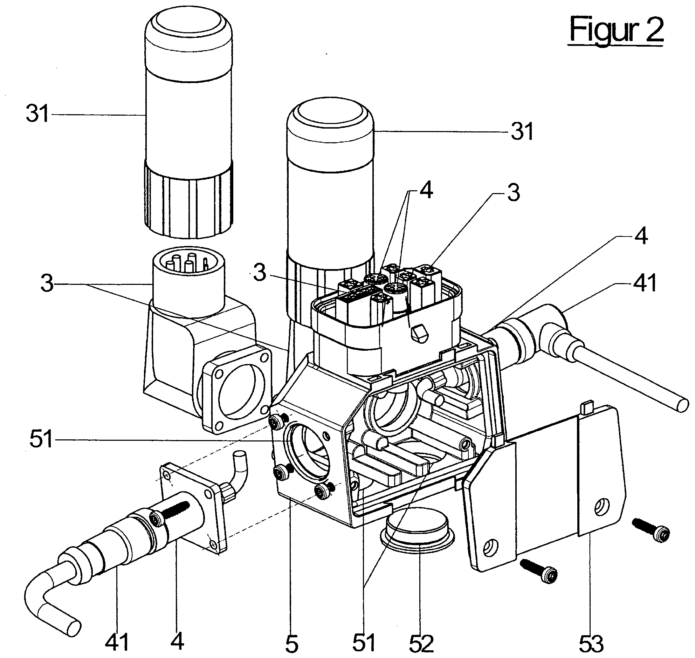

An der nach links weisenden großen Außenfläche der Verteilerbox 5 sind zwei Blindstopfen 52 zu sehen, die die - nur in Figur 2 sehr gut sichtbaren - Öffnungen 51 in der Verteilerbox 5 verschließen. Auf diese Weise kann die in Figur 1 dargestellte Variante auch mit einer sehr hohen Schutzart konfiguriert werden.

Figur 1 lässt auf den ersten Blick den deutlichen Vorzug dieser Ausführungsvariante erkennen: In axialer Richtung des Motors dehnt sich die gesamte Anschlussgarnitur nicht weiter aus, als es durch den überkragenden Teil des Gehäuses 1 mit der darin enthaltenen Elektronikplatine 2 vorgegeben ist. Die Anschlusskabel verlängern also die Gesamtlänge des Antriebes überhaupt nicht.

Im linken Drittel der Figur 1 wird dargestellt, dass durch die Verwendung von einem Winkelstecker als Datengegenstecker 41 die gesamte Abmessung des Antriebs in radialer Richtung begrenzt wird, was gegenüber dem an der Vorderseite gezeigten, geraden Datengegenstecker 41 ein ganz deutlicher Unterschied ist.
In Figur 1 wird an der Datensteckverbindung 4 an der sichtbaren Längsseite auch schnell deutlich, dass sie in vier jeweils um 90 ° gegeneinander verschiedene Positionen einbaubar ist. Dadurch wird erreicht, dass beim Einstecken eines - an der gegenüberliegenden, verdeckten Längsseite dargestellten - winkligen Datengegensteckers 41 das abgehende Kabel nach oben oder nach rechts oder nach links oder nach unten ausgerichtet werden kann.

In **Figur 2** ist eine erfindungsgemäße Verteilerbox 5 im Schrägbild als Einzelteil gezeichnet. Gegenüber der in Figur 1 dargestellten Position ist sie um 90 ° verschwenkt, sodass ihre in Figur 1 verdeckte und zur zweiten Stirnseite 13 weisende Seite sichtbar ist. Diese Seite wird durch einen Deckel 53 gebildet, der in Figur 2 abgeschraubt und zeichnerisch abgerückt ist, sodass der Blick in den Innenraum der Verteilerbox 5 frei wird.

Dadurch wird sofort sichtbar, dass die Verteilerbox 5 in der Ausführungsform der Figur 2 insgesamt sechs Öffnungen 51 aufweist. In der gezeigten Ausführungsform sind alle Öffnungen 51 von gleicher Größe. Deshalb können sie wahlweise mit einer Datensteckverbindung 4 oder mit einer Leistungssteckverbindung 3 bestückt werden.

In Figur 2 ist schnell zu erkennen, dass die Steckverbindungen 3, 4 jeweils in um 90 ° gegeneinander verschwenkte Positionen montiert werden können. Dadurch wird auch die Ausrichtung der winkeligen Gegenstecker 31, 41 vorgegeben. In Figur 2 sind die beiden Leistungssteckverbindungen 3 - von denen nur die linke sichtbar ist - so ausgerichtet, dass der winkelige Leistungsgegenstecker 31 jeweils nach oben weist.

In die Öffnung 51 an der rechten Seite der Verteilerbox 5 ist die erste Datensteckverbindung 4 eingeschraubt. Sie trägt - ebenso wie in Figur 1 - einen winkeligen Datengegenstecker 41. An der gegenüberliegenden Seite der Verteilerbox 5 ist ein Datengegenstecker 41 dargestellt, der gerade verläuft.

Die in dieser Variante ungenutzten beiden Öffnungen 51, die nach unten weisen, sind jeweils mit einem Blindstopfen 52 verschlossen. In Figur 2 wird gut nachvollziehbar, dass diese Blindstopfen 52 die Öffnungen 51 auch mit einer hohen Schutzart abdichten können.

Die in Figur 2 dargestellte Bestückung einer erfindungsgemäßen Verteilerbox 5 ist für solche Fälle geeignet, bei denen der für den gesamten Antrieb verfügbare Einbauraum an dessen Unterseite begrenzt ist. Auch die Beanspruchung von Bauraum an der zweiten Stirnseite in Verlängerung des Gehäuses 13 ist dank der winkeligen Leistungsgegenstecker 31 begrenzt. Ebenso die an der von der ersten Stirnseite 11 des Gehäuses 1 aus gesehen rechten Seite, ebenfalls durch einen winkeligen Datengegenstecker beschränkt. Nur an der in Figur 2 linken Seite ist die Ausladung durch einen geraden Gegenstecker 41 größer. Dafür ist jedoch kein Anschlusskabel an der linken Längsseite des Gehäuses 1 zu verlegen.

In Figur 2 sind an der Oberseite der Verteilerbox 5 in einer gemeinsamen Einhausung zwei Leistungssteckverbindungen 3 für 24 V DC zur Versorgung der Elektronikplatine 2 und für 560 Volt DC zur Versorgung eines Umrichters für die Leistungseinspeisung des Elektromotors angeordnet. Zwischen diesen beiden Leistungssteckverbindungen 3 sind zwei Datensteckverbindungen 4 platziert, die in Figur 2 als kleine Zylinder zu erkennen sind. Diese Steckverbindungen (3,4) sind im Ausführungsbeispiel der Figur 2 jedoch von anderer Form als die übrigen Steckverbindungen (3,4) an der Verteilerbox (5).

Trotzdem wird es nachvollziehbar, dass es alternativ auch möglich ist, den Elektromotor mit der darin integrierten Elektronikplatine (2) unter Weglassen der Verteilerbox (5) direkt an ein Hybridkabel mit Leistungsversorgungen und mit Datenübertragung anzuschließen. Ein zur dargestellten Verteilerbox (5) passender Motor mit integrierter Elektronik muss dann an das "Hybridkabel mit einem "Hybridstrecker" angeschlossen werden, der dem in Figur 2 gezeigten Aufbau auf der Verteilerbox sehr ähnelt.

### Bezugszeichenliste

- 1: Gehäuse des Elektromotors
- 11: erste Stirnseite des Gehäuses 1
- 12: Abtriebswelle des Elektromotors
- 13: zweite Stirnseite des Gehäuses 1
- 2: Elektronikplatine im Gehäuse 1
- 3: Leistungssteckverbindung im Gehäuse oder in Verteilerbox
- 31: Leistungsgegenstecker zur Leistungssteckverbindung 3
- 4: Datensteckverbindung im Gehäuse oder in Verteilerbox
- 41: Datengegenstecker zur Datensteckverbindung 4
- 5: Verteilerbox
- 51: Öffnungen in Verteilerbox 5 für Steckverbindungen 3,4
- 52: Blindstopfen zum Verschließen unbenutzter Öffnungen 51
- 53: Deckel der Verteilerbox 5

## Patentansprüche

1. Elektromotor mit einem Gehäuse (1), in dem wenigstens eine Elektronikplatine (2) angeordnet ist, wobei
- aus der erster Stirnseite (11) des Gehäuses (1) die axial verlaufende Abtriebswelle (12) herausragt und
- an dem Gehäuse (1)
- eine elektrische Leistungssteckverbindung (3) zur Versorgung des Elektromotors und der Elektronikplatine (2) mit elektrischer Energie und
- wenigstens eine elektrische Datensteckverbindung (4) als Sollwerteingabestecker der Elektronikplatine (2) und als Ausgabestecker zum Auslesen von Istwerten und Speicherdaten und zum Austausch anderer Daten
befestigt sind,
**dadurch gekennzeichnet, dass**
die elektrische Leistungssteckverbindung (3) und wenigstens eine elektrische Datensteckverbindung (4) an der der ersten Stirnseite (11) gegenüberliegenden zweiten Stirnseite (13) des Gehäuses (1) angebracht sind,
auf die Leistungssteckverbindung (3) und auf die Datensteckverbindung (4) eine Verteilerbox (5) aufgesteckt ist,
- deren Abmessungen in radialer Richtung kleiner sind als der Querschnitt des Gehäuses (1) und
- die zusätzlich zu den Steckverbindungen (3,4) zwischen Elektromotor, Elektronikplatine (2) und Verteilerbox (5) wenigstens vier Öffnungen (51) zum Einbau von weiteren Steckverbindungen (3,4) aufweist, von denen wenigstens zwei in axiale Richtung des Gehäuses (1) weisen und wenigstens zwei radial ausgerichtet sind und
- innerhalb der Verteilerbox (5) elektrische Verbindungen zwischen den Steckverbindungen (3,4) hergestellt sind.

2. Elektromotor nach Anspruch 1, **dadurch gekennzeichnet, dass** in die Elektronikplatine (2) ein Stromrichter integriert ist, mit dem die Drehzahl oder das Drehmoment oder die Position des Elektromotors steuerbar oder regelbar ist.

3. Elektromotor nach einem der vorhergehenden Ansprüche, **dadurch gekennzeichnet, dass** in wenigstens eine Öffnung (51) wahlweise eine Leistungssteckverbindung (3) oder eine Datensteckverbindung (4) einbaubar ist.

4. Elektromotor nach Anspruch 3, **dadurch gekennzeichnet, dass** die Leistungssteckverbindungen (3) und die Datensteckverbindungen (4) den gleichen Befestigungsflansch aufweisen.

5. Elektromotor nach einem der vorhergehenden Ansprüche, **dadurch gekennzeichnet, dass** die Verteilerbox sechs Öffnungen (51) aufweist, von denen zwei Öffnungen (51) in axiale Richtung weisen und die übrigen Öffnungen (51) radial ausgerichtet sind.

6. Elektromotor nach einem der vorhergehenden Ansprüche, **dadurch gekennzeichnet, dass** unbenutzte Öffnungen (51) durch je einen Blindstopfen (52) verschließbar sind.

7. Elektromotor nach einem der vorhergehenden Ansprüche, **dadurch gekennzeichnet, dass** die Steckverbindungen (3,4) in verschiedenen Ausrichtungen in die Öffnungen (51) eingebaut werden können.

8. Elektromotor nach einem der vorhergehenden Ansprüche, **dadurch gekennzeichnet, dass** die Leistungssteckverbindung (3) und die Datensteckverbindung (4) an der zweiten Stirnseite (13) des Gehäuses (1) in einer gemeinsamen Einhausung zusammengefasst sind.

9. Elektromotor nach einem der vorhergehenden Ansprüche, **dadurch gekennzeichnet, dass** in wenigstens eine Steckverbindung (3,4) ein winkliger Gegenstecker (31, 41) einsetzbar ist, der gegenüber dieser Steckverbindung (3,4) verschwenkbar ist.

10. Elektromotor nach einem der vorhergehenden Ansprüche, **dadurch gekennzeichnet, dass** in wenigstens eine Öffnung (51) auch eine Hybridsteckverbindung eingebaut werden kann, über die sowohl elektrische Leistung als auch elektrische Daten übertragbar sind.

11. Elektromotor nach einem der vorhergehenden Ansprüche, **dadurch gekennzeichnet, dass** auf wenigstens eine Öffnung (51) der Verteilerbox (5) ein Winkeladapter in Form eines zweiseitig offenen Hohlkörpers aufgesetzt ist,
- der an seiner ersten, offenen Seite komplementär zur Öffnung (51) geformt ist und
- dessen zweite, offene Seite identisch zu der Öffnung (51) geformt ist, auf welcher der Hohlkörper aufgesetzt ist, wobei diese beiden Seiten einen beliebigen Winkel zueinander einnehmen können.

12. Maschine mit mehreren Elektromotoren nach einem der vorhergehenden Ansprüche, **dadurch gekennzeichnet, dass** zur seriellen Datenübertragung an mehrere benachbarte Elektromotoren bei der Verteilerbox (5) jedes Elektromotors in zwei der Öffnungen (51) je eine Datensteckverbindung (4) eingebaut ist, die beide innerhalb der Verteilerbox (5)
- mit der Datensteckverbindung (4) für die Elektronikplatine (2) verdrahtet sind und
- auch untereinander verdrahtet sein können.

13. Maschine mit mehreren Elektromotoren nach einem der vorhergehenden Ansprüche, **dadurch gekennzeichnet, dass** zur parallelen Leistungsversorgung mehrerer benachbarter Elektromotoren bei der Verteilerbox (5) jedes Elektromotors in zwei der Öffnungen (51) je eine Leistungssteckverbindung (3) eingebaut ist,
- die innerhalb der Verteilerbox (5) mit der anderen Leistungssteckverbindung (3) verdrahtet ist und
- von der eine weitere Verdrahtung zur Elektronikplatine (2) abzweigt.

14. Verfahren zum Aufbau der seriellen Verkabelung einer Maschine mit mehreren Elektromotoren nach wenigstens einem der vorhergehenden Ansprüche, **dadurch gekennzeichnet, dass**
- in einem ersten Schritt die Elektromotore an der Maschine platziert werden und
- in einem zweiten Schritt geprüft wird, ob der jeweilige Motor im Bereich seiner zweiten Stirnseite (13) in der Maschine einen größeren Freiraum in axialer oder in radialer Richtung hat und
- in einem dritten Schritt bei Motoren mit axialem Freiraum in zwei axial ausgerichtete Öffnungen (51) der Verteilerbox (5) je eine Leistungssteckverbindung (3) mit einem graden Leistungsgegenstecker (31) eingebaut wird und in zwei radial ausgerichtete Öffnungen (51) der Verteilerbox (5) je eine Datensteckverbindung (4) mit je einem winkliger Datengegenstecker (41) eingebaut wird und
- in einem vierten Schritt bei Motoren mit radialem Freiraum Steckverbindungen (3,4) mit graden Gegensteckern (31,41) nur in radial ausgerichtete Öffnungen (51) der Verteilerbox (5) eingebaut werden und in axial ausgerichtete Öffnungen nur Steckverbindungen (3,4) mit winkligen Gegensteckern (31,41) eingesetzt werden.

15. Verfahren nach Anspruch 14, **dadurch gekennzeichnet, dass** zusätzlich zu den seriell verkabelten Elektromotoren weitere Elektromotoren sternförmig mit einem zentralen Anschlusskasten oder einer zentralen Elektronikbaugruppe verkabelt werden, in dem die Kabel direkt an die Leistungssteckverbindung (3) und an die Datensteckverbindung (4) jedes Elektromotors angeschlossen werden

## Claims

1. Electric motor comprising a housing (1), in which at least one electronic circuit board (2) is disposed, wherein
- from the first end face (11) of the housing (1), the axially extending drive shaft (12) projects and
- there are attached on the housing (1)
- an electrical power plug connection (3) for supplying the electric motor and the electronic circuit board (2) with electrical energy and
- at least one electrical data plug connection (4) as setpoint value input plug of the electronic circuit board (2) and, as output plug for reading actual values and stored data and for exchanging other data,
**characterised in that**
the electrical power plug connection (3) and at least one electrical data plug connection (4) are mounted on the second end face (13) of the housing (1), which lies opposite the first end face (11),
onto the power plug connection (3) and onto the data plug connection (4), there is plugged a distribution box (5),
- of which the dimensions in the radial direction are smaller than the cross-section of the housing (1) and
- which, in addition to the plug connections (3, 4) between the electric motor, electronic circuit board (2) and distribution box (5), also has at least four openings (51) for the installation of further plug connections (3, 4), of which at least two face in the axial direction of the housing (1) and at least two are radially oriented, and
- within the distribution box (5), electrical connections are produced between the plug connections (3, 4).

2. Electric motor according to claim 1, **characterised in that,** into the electronic circuit board (2), a power converter is integrated, with which the speed or the torque or the position of the electric motor can be controlled or regulated.

3. Electric motor according to one of the preceding claims, **characterised in that,** into at least one opening (51), a power plug connection (3) or a data plug connection (4) can optionally be installed.

4. Electric motor according to claim 3, **characterised in that** the power plug connections (3) and the data plug connections (4) have the same mounting flange.

5. Electric motor according to one of the preceding claims, **characterised in that** the distribution box has six openings (51), of which two openings (51) face in the axial direction and the other openings (51) are radially oriented.

6. Electric motor according to one of the preceding claims, **characterised in that** unused openings (51) can be closed by at least one blind plug (52).

7. Electric motor according to one of the preceding claims **characterised in that** the plug connections (3, 4) can be installed into the openings (51) in various orientations.

8. Electric motor according to one of the preceding claims, **characterised in that** the power plug connection (3) and the data plug connection (4) are combined on the second end face (13) of the housing (1) in a common encasing.

9. Electric motor according to one of the preceding claims, **characterised in that,** into at least one plug connection (3, 4), an angled counter plug (31, 41) can be inserted, which is pivotable with respect to said plug connection (3, 4).

10. Electric motor according to one of the preceding claims, **characterised in that,** into at least one opening (51), a hybrid plug connection can also be installed, via which both electrical power and electrical data can be transmitted.

11. Electric motor according to one of the preceding claims, **characterised in that,** on at least one opening (51), of the distribution box (5), there is mounted an angle adapter in the form of a hollow body, which is open at two sides,
- and is shaped at its first, open side such that it is complementary to the opening (51), and
- of which the second, open side is shaped identical to the opening (51) , on which the hollow body is mounted, these two sides being able to form an arbitrary angle with respect to one another.

12. Machine comprising a plurality of electric motors according to one of the preceding claims, **characterised in that,** for serial data transfer to a plurality of adjacent electric motors at the distribution box (5) of each electric motor, into two of the openings (51) a data plug connection (4) in each case is installed, which, within the distribution box (5), are both wired
- to the data plug connection (4) for the electronic circuit board (2) and
- can also be wired to one another.

13. Machine comprising a plurality of electric motors according to one of the preceding claims, **characterised in that,** for parallel power supply to a plurality of adjacent electric motors at the distribution box (5) of each electric motor, into two of the openings (51) there is installed a power plug connection (3) in each case,
- which, within the distribution box (5), is wired to the other power plug connection (3) and
- from which a further wiring to the electronic circuit board (2) branches off.

14. Method for construction of the serial cabling of a machine comprising a plurality of electric motors according to at least one of the preceding claims, **characterised in that**
- in a first step, the electric motors are placed on the machine, and
- in a second step it is checked whether the motor in each case has, in the region of its second end face (13) in the machine, a larger clearance in the axial or in the radial direction, and
- in a third step, in the case of motors with axial clearance, into two axially oriented openings (51) of the distribution box (5), one power plug connection (3) in each case with a straight power counter plug (31) is installed and, into two radially oriented openings (51) of the distribution box (5), one data plug connection (4) with an angled data counter plug (41) is installed, and
- in a fourth step, in the case of motors with a radial clearance, plug connections (3, 4) with straight counter plugs (31, 41) are only installed in the radially oriented openings (51) of the distribution box (5) and, in the axially oriented openings, only plug connections (3, 4) with angled counter plugs (31, 41) are inserted.

15. Method according to claim 14, **characterised in that,** in addition to the serially cabled electric motors, further electric motors are cabled in a stellar configuration to a central connection box or a central electronic assembly, in which the cables are connected directly to the power plug connection (3) and to the data plug connection (4) of each electric motor.

## Revendications

1. Moteur électrique muni d'un boîtier (1), dans lequel est disposée au moins une carte électronique (2), sachant que
- l'arbre de sortie (12) suivant un parcours axial dépasse de la première face avant (11) du boîtier (1) et que
- sur le boîtier (1) sont fixées
- une connexion enfichable de puissance électrique (3) destinée à alimenter le moteur électrique et la carte électronique (2) en énergie électrique et
- au moins une connexion électrique enfichable de données (4) en tant que fiche d'entrée de valeurs de consigne de la carte électronique (2) et servant de fiche de sortie pour lire les valeurs réelles et les données mémorisées et pour échanger d'autres données,
**caractérisé par le fait que**
la connexion enfichable de puissance électrique (3) et au moins une connexion électrique enfichable de données (4) sont montées sur la deuxième face avant (13) située en face de la première face avant (11) du boîtier (1),
- qu'un boîtier de distribution (5) est branché sur la connexion enfichable de puissance électrique (3) et sur la connexion enfichable de données (4),
- dont les dimensions sont, dans le sens radial, plus petites que la section du boîtier (1),
- qui présente, outre les connexions enfichables (3, 4) entre moteur électrique, carte électronique (2) et boîtier de distribution (5) au moins quatre ouvertures (51) destinées au montage de connexions enfichables supplémentaires (3, 4), dont au moins deux sont orientées dans le sens axial du boîtier (1) et au moins deux sont orientées dans le sens radial,
- les connexions électriques à l'intérieur du boîtier de distribution (5) étant réalisées entre les connexions enfichables (3, 4).

2. Moteur électrique selon la revendication 1, **caractérisé par le fait que** dans la carte électronique (2) est intégré un convertisseur de courant qui permet de commander ou de régler le régime ou le couple de serrage, ou la position du moteur électrique.

3. Moteur électrique selon une des revendications précédentes, **caractérisé par le fait que** dans au moins une ouverture (51), on peut monter au choix une connexion enfichable de puissance électrique (3) ou une connexion électrique enfichable de données (4).

4. Moteur électrique selon la revendication 3, **caractérisé par le fait que** les connexions enfichables de puissance électrique (3) et les connexions électriques enfichables de données (4) présentent la même bride de fixation.

5. Moteur électrique selon une des revendications précédentes, **caractérisé par le fait que** le boîtier de distribution présente six ouvertures (51), dont deux ouvertures (51) sont orientées dans le sens axial, les autres ouvertures (51) étant orientées dans le sens radial.

6. Moteur électrique selon une des revendications précédentes, **caractérisé par le fait que** les ouvertures (51) non utilisées peuvent être chacune fermée par un bouchon aveugle (52).

7. Moteur électrique selon une des revendications précédentes, **caractérisé par le fait que** les connexions enfichables (3, 4) peuvent être montées avec différentes orientations dans les ouvertures (51).

8. Moteur électrique selon une des revendications précédentes, **caractérisé par le fait que** la connexion enfichable de puissance électrique (3) et la connexion électrique enfichable de données (4) sont rassemblées dans un boîtier commun sur la deuxième face avant (13) du boîtier (1).

9. Moteur électrique selon une des revendications précédentes, **caractérisé par le fait qu'**une contre-fiche angulaire (31, 41), qui peut être pivotée vis-à-vis de cette connexion enfichable (3, 4), peut être insérée dans au moins une connexion enfichable (3, 4).

10. Moteur électrique selon une des revendications précédentes, **caractérisé par le fait qu'**une connexion enfichable hybride, permettant de transmettre à la fois de la puissance électrique et des données électriques, peut également être montée dans au moins une ouverture (51).

11. Moteur électrique selon une des revendications précédentes, **caractérisé par le fait qu'**un adaptateur angulaire ayant la forme d'un corps creux ouvert des deux côtés est posé sur au moins une ouverture (51) du boîtier de distribution (5),
- qui a, sur son premier côté ouvert, une forme complémentaire à l'ouverture (51) et
- dont le deuxième côté ouvert, sur lequel le corps creux est posé, a une forme identique à l'ouverture (51), sachant que ces deux côtés peuvent adopter n'importe quel angle l'un par rapport à l'autre.

12. Machine dotée de plusieurs moteurs électriques selon une des revendications précédentes, **caractérisée par le fait qu'**aux fins d'une transmission série de données vers plusieurs moteurs électriques voisins, une connexion de données (4) est incorporée dans chacune des deux ouvertures (51) au niveau de la boîte de distribution (5) de chaque moteur électrique, lesquelles connexions
- sont câblées avec la connexion électrique enfichable de données (4) pour la carte électronique (2) et
- peuvent également être câblées les unes aux autres.

13. Machine dotée de plusieurs moteurs électriques selon une des revendications précédentes, **caractérisée par le fait qu'**aux fins d'une alimentation parallèle de puissance vers plusieurs moteurs électriques voisins, une connexion enfichable de puissance électrique (3) est incorporée dans chacune des deux ouvertures (51) au niveau de la boîte de distribution (5) de chaque moteur électrique, lesquelles connexions
- sont câblées avec l'autre connexion enfichable de puissance électrique (3) à l'intérieur du boîtier de distribution (5) et
- à partir de laquelle un autre câblage bifurque vers la carte électronique (2).

14. Procédé de construction du câblage série d'une machine avec plusieurs moteurs électriques d'après au moins une des revendications précédentes, **caractérisé par le fait que**
- dans une première étape, les moteurs électriques sont placés sur la machine et
- qu'on vérifie, dans une deuxième étape, si le moteur respectif, dans la zone de sa deuxième face avant (13) dispose dans la machine d'un espace libre assez important dans le sens axial ou dans le sens radial et
- dans une troisième étape, dans le cas des moteurs disposant d'un espace libre axial, une connexion enfichable de puissance électrique (3) avec une contre-fiche de puissance (31) droite est incorporée dans chacune des deux ouvertures (51) orientées dans le sens axial de la boîte de distribution (5), et une connexion électrique enfichable de données (4) est incorporée dans chacune des deux ouvertures (51) du boîtier de distribution (5) orientées dans le sens radial,
- dans une quatrième étape, dans le cas de moteurs disposant d'un espace libre dans le sens radial, des connexions enfichables (3, 4) avec des contre-fiches droites (31, 41) sont seulement incorporées dans des ouvertures du boîtier de distribution (5) orientées dans le sens radial, seules des connexions enfichées (3, 4) ayant des contre-fiches angulaires (31, 41) devant être insérées dans les ouvertures orientées dans le sens axial.

15. Procédé selon la procédure 14, **caractérisé par le fait qu'**en sus des moteurs électriques câblés en série, d'autres moteurs électriques sont câblés en forme d'étoile avec un boîtier de raccordement central ou un sous-ensemble électronique central, dans lequel le câble est raccordé directement à la connexion enfichable de puissance électrique (3) et à la connexion électrique enfichable de données (4) de chaque moteur électrique.
